Europäisches Patentamt

European Patent Office

Office européen des brevets

(19)

(11) Publication number: **0 075 620**
**B1**

# (12) EUROPEAN PATENT SPECIFICATION

(45) Date of publication of patent specification: 27.08.86

(51) Int. Cl.⁴: **G 08 C 19/00,** G 01 K 13/08, G 01 D 5/00

(21) Application number: **81304458.3**

(22) Date of filing: **28.09.81**

(54) **A printed circuit board assembly for a rotary signal transmitter for use in a system for transmitting measurement data from a rotating body.**

(43) Date of publication of application:
**06.04.83 Bulletin 83/14**

(45) Publication of the grant of the patent:
**27.08.86 Bulletin 86/35**

(84) Designated Contracting States:
**DE FR GB**

(56) References cited:
**DE-A-2 852 679**
**DE-A-2 937 656**
**DE-A-2 947 549**

The file contains technical information submitted after the application was filed and not included in this specification

(73) Proprietor: **FUJI ELECTRIC CO., LTD.**
**1-1, Tanabeshinden, Kawasaki-ku**
**Kawasaki-shi Kanagawa 210 (JP)**
(73) Proprietor: **TEIJIN LIMITED**
**1-1 Uchisaiwai-cho 2-chome**
**Chiyoda-ku Tokyo 100 (JP)**

(72) Inventor: **Imose, Kazuo**
**27 Higashi-ashiyachoh**
**Ashiya-shi Hyohgo-ken (JP)**
Inventor: **Yamamuro, Kiyoshi Fuji Electric Co. Ltd.**
**Patent Department 1-1 Tanabeshinden**
**Kawasaki-ku Kawasaki-shi Kanagawa (JP)**
Inventor: **Takeuchi, Hironori**
**Fuji Electric Co. Ltd. 1-1 Tanabeshinden**
**Kawasaki-ku Kawasaki-shi Kanagawa (JP)**
Inventor: **Misawa, Takashi**
**Fuji Electric Co. Ltd. 1-1 Tanabeshinden**
**Kawasaki-ku Kawasaki-shi Kanagawa (JP)**

(74) Representative: **Gordon, Martin et al**
**G.F. Redfern & Company Marlborough Lodge 14**
**Farncombe Road**
**Worthing West Sussex, BN11 2BT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a rotary signal transmitter and transmission system for detecting quantities to be measured such as temperatures of a rotating body and for transmitting the measurement data from the rotating body to a stationary receiver via a contactless transmission path and is particularly concerned with the structure of a printed circuit board assembly for a rotary transmitter in the measurement data rotary transmission system.

In the synthetic fibre industry, metal rollers generally called roll heaters are used which are heated as by an induction heater and caused by a motor to rotate at high speeds for drawing and heat-setting yarns. To produce yarns of good quality, the surface temperature of the roll heater should be controlled so as to be at an optimum for the yarn processing. It is necessary to detect the correct surface temperature of the metal roller and transmit the measurement data to a control device for the roller. A system is known which includes a temperature sensor embedded in the metal roller for producing an output signal which is delivered externally to a fixed stationary heater control device which comprises a central processing unit, the output signal being transmitted via a brush and a slip ring. The latter arrangement, however, does not enable the heater control device to pick up the output signal stably with precision over a long period of time.

Since such a system fails to meet practical requirements, a contactless signal transmission system has been employed in the art. More specifically, the rotating body is equipped with a transmitter for converting the output from a temperature sensor to a predetermined signal form and for transmitting the latter to a fixed receiver via a contactless transmission path. Various systems are known which comprise such a transmitter.

One system comprises a thermoresistance serving as a temperature sensor with its resistance variable with temperature, and a Wien bridge for detecting the resistance of the resistor and converting it to a frequency signal, which is then transmitted through a rotary transformer to the fixed receiver.

In another system, a signal indicative of the resistance of the temperature sensor is amplified and frequency-modulated by a modulator and is transmitted to the fixed receiver via a transmission circuit and an aerial.

Still another system is characterised in that an output signal from the temperature sensor is converted to a corresponding frequency signal which is then converted by an electrooptical converter to a light signal that is optically transmitted from a light-emitting element to a photosensitive element.

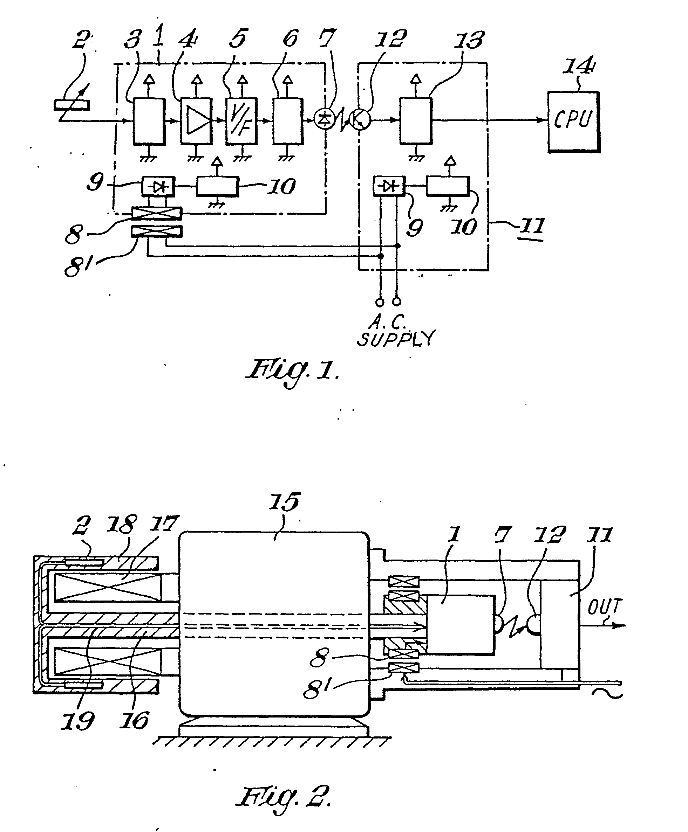

Temperature signal transmission apparatus of the last-mentioned type for transmitting light signals is shown in a schematic block circuit diagram in Fig. 1 of the accompanying drawings, and a roll heater utilising such a temperature signal transmission apparatus is schematically illustrated in Fig. 2

In the apparatus shown in Fig. 1, a temperature signal transmitter 1, mounted on a roller of a roll heater, is connected to a temperature sensor 2 for producing an output signal indicative of temperature, which is delivered through a voltage conversion circuit 3, an amplification circuit 4, a voltage-to-frequency conversion circuit 5, and an energisation circuit 6 to a signal transmitter or a light-emitting element 7 which produces a light output signal. The temperature signal transmitter 1 is supplied with electric power from a fixed stationary receiver 11 through a secondary winding 8 of a rotary transformer serving as a power supply, a rectification circuit 9, and a constant-voltage supply circuit 10.

The fixed receiver 11 comprises a photosensitive element 12 disposed on the optical axis of the light-emitting element 7 for receiving the light signal therefrom, and a conversion circuit 13 for converting the light signal to an electric signal, which is delivered to a central processing unit 14 which serves as a heater control device. Designated at 8' is a stationary primary winding of the rotary transformer.

A roll heater equipped with the temperature signal transmission apparatus thus constructed is shown in Fig. 2, and comprises a metal roller 18 mounted on one end of a rotational shaft 16 of a drive motor 15 and arranged to be heated by a fixed induction heater coil 17, the metal roller 18 having the temperature sensor 2 embedded therein. The other end of the rotational shaft 16 supports the transmitter 1 which is electrically connected to the temperature sensor 2 by means of a wire 19 extending through a central axis bore in the rotational shaft 16. The receiver 11 and the primary winding 8' of the rotary transformer are supported on a frame projecting laterally from a casing of the motor 15. The temperature sensor may comprise thermally sensitive elements such as a thermistor or a thermocouple as well as the thermoresistance mentioned above.

The circuits 3 to 6 of the transmission apparatus as shown in Fig. 1 are normally constructed as printed circuits including various electronic components such as ICs, miniature capacitors, resistors, transistors and diodes mounted on printed circuit boards. These electronic parts are soldered to the boards via thin wires, and hence are mechanically unstable. The wires are likely to be broken under undue external forces applied accidentally, resulting in damage to the mounted parts. Thus, the printed circuits require much attention when they are handled. Since the roll heater is driven to rotate at high speeds while in operation, the electronic components assembled and mounted on the roller are subjected to considerable centrifugal forces. There has therefore been much concern about how to safeguard against centrifugal forces imposed on the electronic components of the transmitter.

Various attempts have been made to provide assembly structures for electronic components to be mounted on the roller. In German specification DE—A—2852 679 there is disclosed such a prior art arrangement in which components are mounted on a printed circuit board so as to face in an axial direction.

None of the prior proposals have met practical requirements as they permit the electronic components to give way under centrifugal forces applied while the roller is revolving at high speeds. An effort has also been made to encase the printed circuits in plastics material for increased mechanical strength. The encasement of the parts however is disadvantageous in that the printed circuits cannot be inspected and the individual components cannot be replaced.

It is an object of the present invention to provide a simple, reliable, easily assembled measurement data transmission system for use on a rotary body which will better withstand centrifugal forces imposed while the rotary body is revolving at high speeds, so reducing the risk of the system being damaged.

According to this invention there is provided a rotary printed circuit board assembly for a signal transmitter for mounting on the axis of rotation of a rotating body, said assembly comprising a bobbin-shaped attachment base having a pair of flanges, electronic parts being secured to mounting surfaces of printed circuit boards which face radially inwardly, said printed circuit boards being mounted on said pair of flanges and around said attachment base in circumferentially spaced and cylindrical arrangement.

A rotary signal transmitter can incorporate such an assembly mounted on a shaft for rotation with the latter.

A system for transmitting measurement data from a rotating body can include such a rotary signal transmitter connected to a sensor and arranged to transmit measurement data signals via a contactless transmission path to a stationary receiver connected to a data processing arrangement.

Preferably, in the assembly, said one or more printed circuit boards and said electrical components are arranged such as to be balanced rotationally along any diameter of the assembly.

It may be that each of said flanges is polygonal, said printed circuit boards being secured to the polygon sides the number of which corresponds to the number of printed circuit boards. It may be useful to provide a binder wound around the arrangement of said printed circuit boards to fasten the latter together. Conveniently connection wires interconnect adjacent mounting surfaces of said printed-circuit boards.

An embodiment may include means for multiplexing a plurality of signals for transmission.

In one form of rotary signal transmitter said printed circuit board assembly has a boss on which is mounted a rotary transformer assembly of a secondary coil and a core and a stationary power supply being provided for supplying an electric current through said rotary transformer to a signal conversion circuit of the transmitter.

Conveniently in a rotary signal transmitter a signal transmission device is provided comprising a light-emitting element, an end attachment base being removably secured to the axial end of said printed circuit board assembly to support centrally thereon said light-emitting element, said light-emitting element having its optical axis held in alignment with a central axis of said rotational shaft. Also it may include terminals mounted on said end attachment base on which said light-emitting element is supported, and connection wires interconnecting a sensor and said printed circuit board assembly and connected to said terminals. Advantageously the transmitter has a disk-shaped protective cover covering said end attachment base on which said light-emitting element is mounted, said disk-shaped protective cover having a central aperture through which said light-emitting element can emit light, and openings through which connection wires on said end attachment base can be visually inspected.

The rotary signal transmitter may be arranged so that said printed circuit board assembly is secured to said rotational shaft by means of screws or pins extending through radial bores in said flanges, said bores being located between adjacent printed-circuit boards such as not to be covered thereby. In such a case the transmitter may include a protective cover surrounding the printed circuit board assembly, said protective cover having a diameter approximating an outside diameter of said assembly, and said protective cover having holes at predetermined positions for insertion therethrough of a screwdriver for turning the screws securing said printed circuit board assembly to said rotational shaft.

A system for transmitting measurement data from a rotating body may include a plurality of sensors connected to the rotary signal transmitter.

In one such system said plurality of sensors are mounted on a single rotating body, and multiplexing means are provided comprising a time-sharing circuit for time-sharing the output signals from said sensors and supplying the time-shared signals to a signal conversion circuit for supplying signals for transmission.

In another such system said plurality of sensors are mounted respectively on different rotating bodies, said signal transmitter for each rotating body having a light-emitting element, a receiver comprising a plurality of condenser lenses disposed in respective confronting relationships to said light-emitting elements, and an optical-fibre cable connected optically between said condenser lenses and a central processing unit, and multiplexer means being arranged to control light signals emitted from said light-emitting elements.

Embodiments of the present invention will now be described in detail with reference to the accompanying drawings in which:—

Fig. 1 is a schematic block circuit diagram of a rotary signal transmission system as employed in the prior art;

Fig. 2 is a cross-sectional view of a roll heater equipped with the system shown in Fig. 1;

Fig. 3 is a side elevation, with the upper half in cross section, of a portion of a rotary signal transmitter embodying this invention;

Fig. 4 is an end view of the transmitter shown in Fig. 3;

Fig. 5 is a cross-sectional view taken along the line V—V of Fig. 3;

Fig. 6 is a side elevation of the transmitter with a protective cover assembly;

Fig. 7 is an end view of the transmitter shown in Fig. 6;

Fig. 8 is a side elevation, with parts in cross section, of a portion of a roll heater system embodying the signal transmitter shown in Fig. 3;

Fig. 9 is a cross-sectional view of a roll-heater system employing a multiplex rotary transmission system forming a third embodiment of this invention;

Fig. 10 is a schematic block circuit diagram of the transmission system used in the roll-heater system shown in Fig. 9; and

Fig. 11 is a block circuit diagram of a multiplex rotary transmission system forming a fourth embodiment of the present invention.

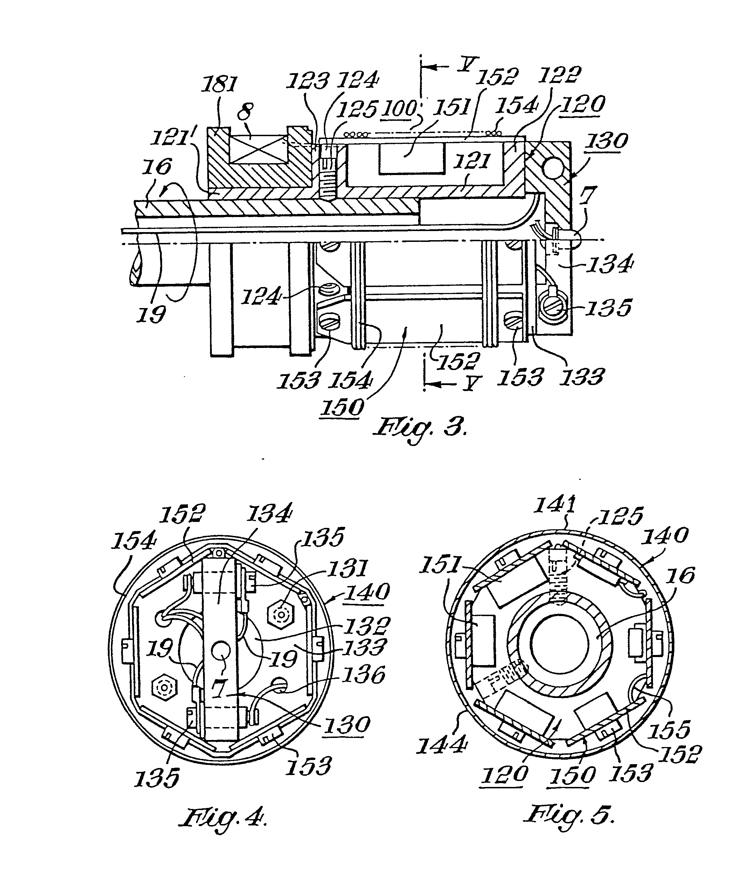

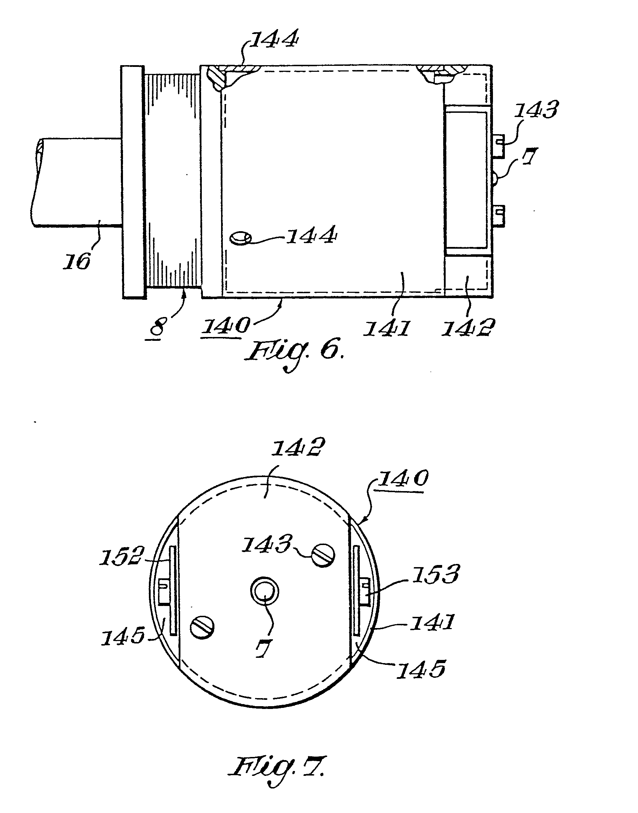

In Figs. 3 to 8, a signal transmitter 100 mounted on a rotational shaft 16 of a drive motor comprises an attachment base 120 for a printed circuit, an attachment base 130 for a light-emitting element, a protective cover assembly 140, a printed circuit 150 mounted on the attachment base 120 and serving as a signal conversion circuit, a signal transmission or light-emitting element 7 mounted on the attachment base 130, and a secondary coil 8 and annular core 181 of a rotary transformer which is to provide connection to a power supply.

The attachment base 120 is moulded of aluminium, for example, and includes a boss 121 fitted over the rotational shaft 16 and a pair of larger-diameter flanges 122, 123 located respectively at one end of the boss 121 and at an intermediate position thereof, the attachment base 120 thus assuming the shape of a bobbin. The boss 121 has an axial extension 121', extending leftward (as shown) of the flange 123 and supporting thereon the rotary transformer.

The flanges 122, 123 have outer peripheral surfaces serving as seats for printed circuit boards as described later and are each cut in the shape of a regular polygon (a regular hexagon in the illustrated embodiment) depending on the number of printed circuit boards to be mounted. The intermediate flange 123 has two threaded bores 124 extending radially inwardly from vertices of the polygonal shape and receptive of set screws 125 to fix the attachment base 120 to the rotational shaft 16. The vertices of the polygonal flange 123 are provided with flats to facilitate formation of the threaded holes 124. The core 181 on which the secondary winding 8 of the rotary transformer is wound is fitted over the boss extension 121' of the attachment base 120.

The attachment base 130 is made of an electrically insulating material and removably secured to an end surface of the flange 122 of the attachment base 120 by means of bolts 131 (Fig. 4) having threaded recesses in their heads. The attachment base 130 includes a disk-shaped base plate 133 having a central aperture 132 for passage therethrough of connection wires, and an attachment base portion 134 integral with the base plate 133 and elongate diametrically of the transmitter, the base portion 134 projecting axially from the surface of the base plate 133. The attachment base portion 134 supports the light-emitting element 7 fitted therein which has its optical axis aligned with the central axis of the rotational shaft 16. The attachment base 130 also acts as a terminal base in that the attachment base portion 134 has on its sides terminal 135 to which are connected wires 19 connected to a temperature sensor. Designated at 136 are apertures communicating with the interior of the bobbin-shaped attachment base 120 for passage therethrough of connection wires. The terminals 135 are attached to the sides of the attachment base 130 so that they can be screwed from the side. The terminals 135 are thus directed generally in a direction in which the rotary body rotates, thereby reducing the risk that the connection wires will be displaced on rotation of the rotary body.

The protective cover assembly 140 comprises a cylindrical cover 141 surrounding the periphery of the attachment base 120, and a cup-shaped cover 142 axially covering the attachment body 130. The cylindrical cover 141 has one end fitted in a step on a shoulder of the core 181 of the rotary transformer and the other end held in engagement with the cup-shaped cover 142. The cup-shaped cover 142 is secured in position by means of bolts 143 which have screw-threads engaging the threaded recesses in the heads of the bolts 131 which attach the base 130 to the base 120. The cylindrical cover 141 has holes 144 for insertion of a screwdriver for turning the set screws 125 with the cylindrical cover 141 still in place. The cup-shaped cover 142 has a central opening through which the light-emitting element is exposed, and side openings 145 through which the connection wires can be visually inspected. When the connection wires are to be connected to the terminals, the cup-shaped cover 142 can be removed via clearance between the light-emitting element and a photosensitive element arranged to receive the light from the light-emitting element.

The printed circuit 150 will now be described. Electronic components 151 of which the printed circuit 150 is composed are securely mounted on a mounting surface of each of a plurality (six in the illustrated embodiment) of rectangular printed circuit boards 152. The printed circuit boards 152 are disposed around the circumference of the attachment base 120 with the mounting surfaces facing radially inwardly. The boards 152 extend between the polygonal flanges 122, 123 and are secured to the outer faces of the polygonal flanges 122, 123 by means of bolts 153.

With the printed circuit boards 152 thus secured in place, the electronic components 151 are accommodated in a space defined by the boss 121 and flanges 122, 123. The printed circuit boards 152 have corners angled to provide spaces between adjacent boards which are large enough to expose the screw holes 124 for receiving the set screws 125 which attach the attachment base 120 to the rotational shaft 16.

The printed circuit boards 152 as mounted on the attachment base 120 are securely fastened together by means of a binding member 154 wound therearound to reinforce the boards 152 and so increase their mechanical strength against centrifugal forces imposed on the boards 152 while the rotary body is revolving. The binding member 154 may comprise an insulating yarn or tapes. In some cases, the printed circuit boards 152 may be secured to the base 120 only by means of the binding member 154, and the bolts 153 may be dispensed with. With this modified arrangement, the flanges 122, 123 may be provided with radially inward recesses into which the ends of the printed circuit boards 152 can be fitted so that the boards 152 seat on the bottoms of the recesses, thus preventing the printed circuit boards 152 from being displaced circumferentially or axially. As an alternative, the binding member 154 may be dispensed with, and the printed circuit boards 152 may be held in position against centrifugal forces by means of the cylindrical protective cover 141.

The cylindrical cover 141 of the protective cover assembly 140 has a diameter which is only slightly larger than the outside diameter of the assembly of the attachment base 120 and the printed circuit boards 152. With such an arrangement, if the set screws 153 become loose and tend to disengage from the boards 152 while the transmitter is revolving, they will hit the inner surface of the cylindrical cover 141 and be prevented from flying away.

The connection wires are connected in the signal transmitter 100 as follows: The wires 19 extending from the non-illustrated temperature sensor through a central axial bore in the rotatable shaft 16 of the motor and through the central aperture 132 in the attachment base 130, are connected to the terminals 135, which are connected to the printed circuit 150 by means of connection wires extending through the apertures 136 in the attachment base 130, as shown in Fig. 4. The printed circuit 150 is connected to the light-emitting element 7 by means of connection wires extending through one of the apertures 136. The printed circuit boards 152 are electrically interconnected by means of connection wires 155 which extend on the same side as the component-mounting surfaces of the boards 152, as illustrated in Fig. 5. The crossover connection wires 155 thus connected between the boards 152 are thus inhibited from being forced off the boards 152 under the action of centrifugal forces.

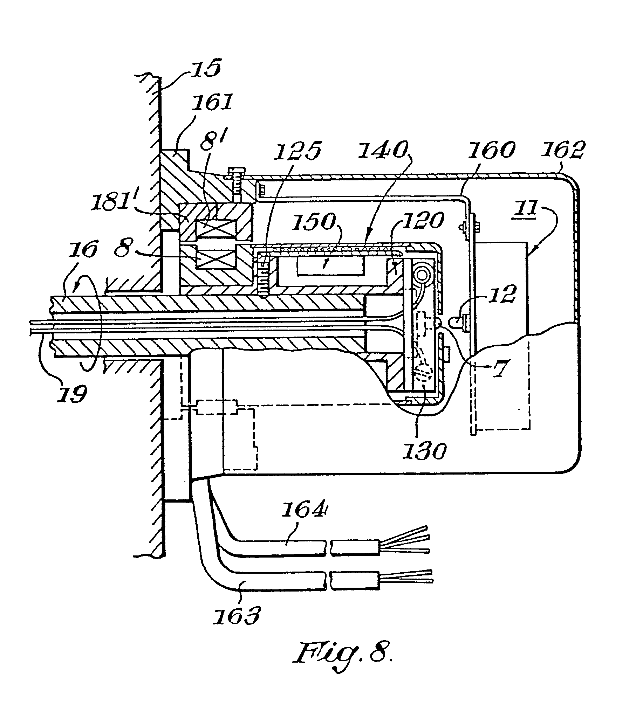

Fig. 8 illustrates an assembled transmission system as a whole. A receiver 11 is supported on a stationary bracket of a drive motor 15 by means of a support arm 160 and a flange 161 so that the receiver 11 is stationary with respect to the transmitter 100. The receiver 11 has a photosensitive element 12 whose optical axis is aligned with that of the light-emitting element 7 in the transmitter 100. The flange 161 supports thereon an assembly comprising a primary winding 8' of the rotary transformer which extends around the secondary winding 8, and an annular core 181' surrounding the secondary winding 8', the assembly being partially fitted into and secured by means of screws to the flange 161. The flange 161 projects axially but such that it will not interfere with turning of the set screws 125 in the attachment base 120 with a screwdriver. The transmitter 100 and the receiver 11 are protected by means of a dust cover 162 secured by means of screws to the flange 161. Designated at 163, 164 are connection wires connected to the primary winding of the rotary transformer and to the output of the receiver 11, respectively.

Thus, with the above described embodiment, the printed circuit in the transmitter comprises a plurality of printed circuit boards on which electronic components are securely mounted on surfaces thereof which face radially inwardly, the printed circuit boards being secured to and spaced circumferentially around the attachment base at equal intervals. When the rotary body is rotated at high speeds, the electronic components are subjected to centrifugal forces which cause the components to be pressed against and so, supported by, the printed circuit boards, with the result that the connection wires between the electronic components which are mechanically weak and portions of the connection wires which are soldered to the printed circuit boards will not be subjected to undue loads which would otherwise damage them, and hence have an increased resistance to damage due to centrifugal forces. The printed circuit boards are circumferentially equi-spaced around the rotational shaft of the rotary body and have a small radius of rotation, so that they do not impose an unbalanced load on the rotary body and particularly the drive motor, and enable smooth high-speed operation of the rotary body. The printed circuit boards, attachment base for the light-emitting element, rotary transformer, and protective cover assembly are so supported and structured that the rotary transmission system is reliable in operation and can be assembled and handled readily.

While in the foregoing embodiments the optical signal transmission system using a light-emitting element has been described, other systems such as those using radio waves or electromagnetism may instead be employed to transmit signals from a rotating transmitter to a stationary receiver via a contactless transmission path. The present invention is not limited to systems for transmitting signals indicative of measured temperatures, but is also applicable to systems for transmitting signals indicative of other physical and chemical quantities measured, and of electrical quantities such as a current and voltage in the rotor of an electrical rotary machine.

The foregoing embodiment is directed to the assembly structures of signal transmitters in systems for transmitting measurement data from a rotary body. The rotary body, (e.g. roll heater) in the above embodiment has a signal sensor for detecting a quantity to produce a signal indicative of the detected quantity, which is transmitted to a central processing unit independent of a system including the rotary body.

There are known some roll heaters for heat-setting synthetic yarns where the roll heaters are designed so as to allow several turns or convolutions of yarn to be wound therearound. It is desirable from the standpoint of yarn quality control to enable the roll heater to be heated to different temperatures at varying points thereof. It is customary in factories for manufacturing synthetic yarns to have a multiplicity of yarn heat-setting roll heaters heated under control of a central heating system. Thus, for the control of temperatures of a single roll heater having a plurality of sensors or a plurality of roll heaters each having a sensor, signals from the plurality of sensors are required to be delivered to a central controller or a central processing unit. Providing respective signal transmission paths for the sensor however would result in an increased number of connection wires required and a large space occupied by the connection wires. Furthermore, the signals as transmitted via the respective transmission paths would interfere with each other through electromagnetic induction and could not properly be delivered to the central processing unit.

In still another embodiment, the above difficulties can be eliminated by using a multiplex signal transmission system for use with a measurement data transmission apparatus for reliably transmitting signals via a simplified signal transmission path.

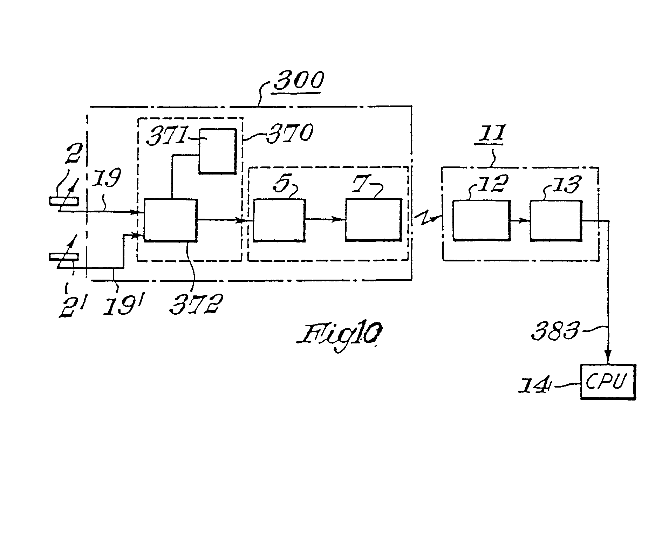

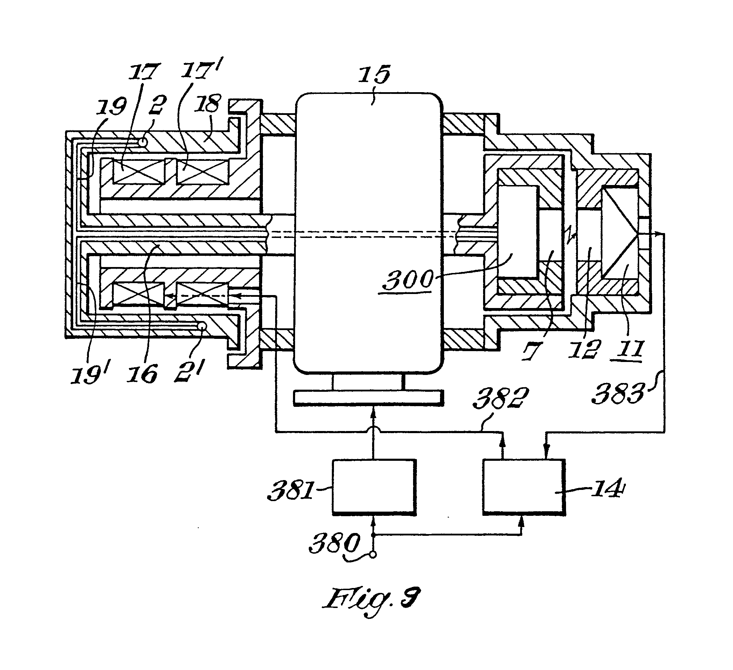

Figs. 9 and 10 illustrate such a multiplex rotary signal transmission system. A pair of stationary induction heater coils 17, 17' are disposed in a single roll heater 18 for heating different respective portions of the latter. A pair of temperature sensors 2, 2' are embedded in the roll heater 18 at positions axially corresponding to the heater coils 17, 17' for detecting the temperatures of the different portions of the roll heater 18. Connection wires 19, 19' extend respectively from the sensors 2, 2' axially through a rotational shaft 16 of a motor 15 to an electric circuit which constitutes a signal transmitter 300. Output signals from the sensors are converted to light signals which are delivered to a stationary receiver from which corresponding signals are transmitted to a central processing unit.

The arrangement described above is substantially the same as that shown in Figs. 3 to 8. As illustrated in Fig. 10, output signals from the sensors 2, 2' are fed to a voltage-to-frequency converter 5 through a multiplexer comprising a time-sharing circuit 370 and a voltage conversion circuit and an amplifier which are not shown. The time-sharing circuit 370 comprises a clock pulse generator 371 and a switch 372.

The output signals from the sensors 2, 2'; representing the analogue quantity temperature, are supplied through the wires 19, 19', respectively, to the switch 372 in the time-sharing circuit 370. The switch 372 is alternated in state by clock pulses supplied from the clock pulse generator 371. An output signal from the switch 372 is applied to the voltage-to-frequency converter 5 in which the output signal is converted to pulses having a frequency proportional to the analogue quantity. An output signal from the voltage-to-frequency converter 5 is delivered to the light-emitting element 7. Designated in Fig. 9 at 380 is a power supply 381 being an inverter serving as a power supply for controlling the motor 15, and 382 a signal transmission line for delivering output signals from the central processing unit or controller 14 to the heater coils 17, 17'.

The system thus constructed operates as follows: Temperatures at different portions of the roll heater 18 while being rotated by the motor 15 are detected by the temperature sensors 2, 2' which produce output signals that are delivered to and time-shared by the time-sharing circuit 370. The signals thus time-shared are transmitted via the voltage-to-frequency converter 5, the light-emitting element 7, the photosensitive element 12 and the converter circuit 13 to the central processing unit 14 which is independent of the system including the rotary body. The time-shared signals are separated by the central processing unit 14 into respective signals indicative of the temperatures at the different portions of the roll heater 18 and used to control the induction heater coils 17, 17', that positionally correspond to the different roll heater portions, such as to heat the latter to desired temperatures.

The photosensitive element 12 may be replaced with a condenser lens, and a transmission path 383 between the receiver 11 and the central processing unit 14 may comprise an optical-fibre cable for transmitting signals from the rotating body by way of light communication. Signals indicative of temperatures detected may be frequency-modulated into radio-wave signals which are picked up by an appropriate form of the receiver 11. The number of temperature sensors may be three or more though two sensors are shown in the above embodiment for brevity.

The rotary transmission system shown in Figs. 9 and 10 thus comprises a plurality of temperature sensors disposed at different positions in a rotary body, a time-sharing means for time-sharing the output signals from the respective temperature sensors, and means for delivering the time-shared signals by way of multiplex transmission to a central processing unit outside the rotary body. Thus, signals indicative of temperatures at different positions in a single roll heater can be transmitted via a simple transmission path to the central processing unit independently of the rotary body system.

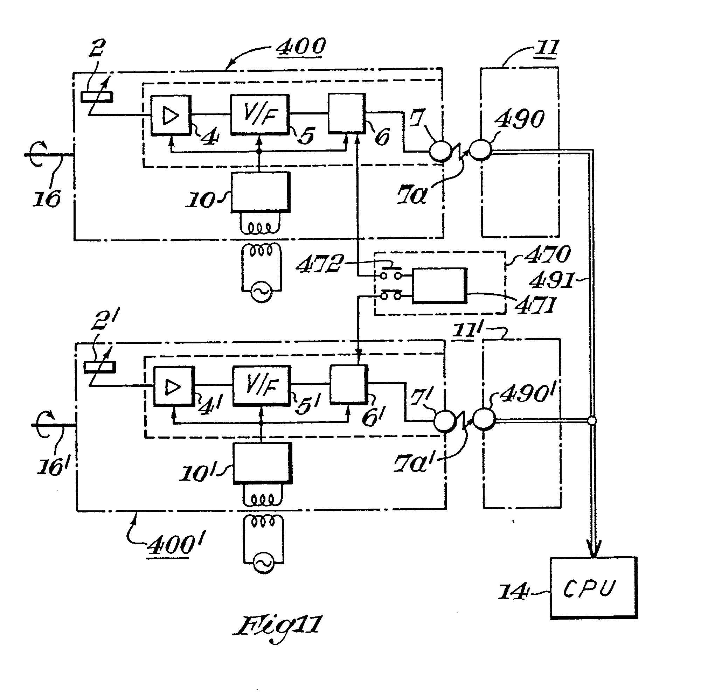

Fig. 11 shows a multiplex rotary transmission system in still another embodiment for transmitting together output signals from sensors in a plurality of roll heaters to a central processing unit. A pair of independent roll heaters (not shown) are associated respectively with a pair of signal transmitters 400, 400' comprising temperature sensors 2, 2' amplifiers 4, 4', voltage-to-frequency converters 5, 5', energisation circuits 6, 6', light-emitting elements 7, 7', and constant-voltage circuits 10, 10' which are supplied with currents via respective rotary transformers. Fixed receivers 11, 11' co-operate respectively with the signal transmitters 400, 400' and include condenser lenses 490, 490', respectively, facing the light-emitting elements 7, 7' and connected in parallel to a central processing unit 14 via a single optical-fibre cable 491. A multiplexer or time-sharing circuit 470 is connected to the energization circuits 6, 6' in the signal transmitters 400, 400' respectively, the time-sharing circuit 470 comprising a clock pulse generator 471 and a pair of switches 472, 472' connected to the energisation circuits 6, 6'. The energization circuits 6, 6' are alternately switched on and off in synchronization with clock pulses from the clock pulse generator 471 for controlling the light signals 7a, 7a' by determining the order in which the light signals 7a, 7a' are discharged from the light-emitting elements 7, 7' and/or varying the periods of transmission of the light signals 7a, 7a'. The optical fibre cable 491 provides a common transmission path for the multiplexed light signals 7a, 7a' to be delivered from the condenser lenses 490, 490' to the central processing unit 14.

Operation of the multiplex rotary transmission system shown in Fig. 11 is as follows. Output signals from the temperature sensors 2, 2' are converted into amplified voltage signals by the amplifiers 4, 4' respectively. The amplified signals are converted by the voltage-to-frequency converters 5, 5' to signals indicative of frequencies, which are in turn converted by the energisation circuits 6, 6' to signals that are intensive enough to energise the light-emitting elements 7, 7' respectively, dependent on the frequencies. The time-sharing circuit 470 causes the light-emitting elements 7, 7' to emit the light signals 7a, 7a' with different periods of transmission. The condenser lenses 490, 490' pick up the light signals 7a, 7a' and deliver them through the optical-fibre cable 491 to the central processing unit 14. The central processing unit 14 separates the light signals 7a, 7a' from each other to control the roll heaters (not illustrated) to be heated to desired temperatures by induction heating. While in the above embodiment two temperature sensors are employed, three or more temperature sensors may instead be incorporated.

With the above described embodiment, signals indicative of temperatures detected from a plurality of roll heaters are converted to light signals which are controlled by the multiplexer before being transmitted to the central processing unit through the optical-fibre cable. Thus, a number of signal transmission wires are unecessary and wiring space can be greatly reduced. In addition, signals while being transmitted will not interfere with each other through electromagnetic induction, and hence can be transmitted without being adversely affected en route.

Clearly either of the embodiments shown in Figs. 9 and 11 can be combined with the embodiment shown in Fig. 3, as well as with each other.

It is apparent that the transmitters 100, 300 and 400 described above include printed circuit board assemblies in which the electronic components are arranged on the printed circuit boards in such a way that, in use, the centrifugal force acting on the electronic components has no nett component directly urging the electronic components away from the surface of the relevant printed circuit board. Thus a much more stable and secure configuration is obtained than when the components are secured to radially outer surface of the printed circuit boards. This reduces significantly the risk of damage to the printed circuit assembly.

This is achieved by providing a rotary printed circuit board assembly (150) comprising a bobbin-shaped attachment base (120) having a pair of flanges (122, 123) electronic parts (151) being secured to mounting surfaces of printed circuit boards (152) which face radially inwardly, said printed circuit boards (152) being mounted on said pair of flanges (122, 123) and around said attachment base (120) in circumferentially spaced and cylindrical arrangement.

## Claims

1. A rotary printed board assembly for a signal transmitter for mounting on the axis of rotation of a rotating body, said assembly comprising electronic parts secured to mounting surfaces of printed circuit boards characterised in that said assembly further comprises a bobbin-shaped attachment base having a pair of flanges and in that said mounting surfaces face radially inwardly, said printed circuit boards being mounted on said pair of flanges and around said attachment base in circumferentially spaced and cylindrical arrangement.

2. An assembly according to claim 1 wherein said printed circuit boards and said electrical components are arranged such as to be balanced rotationally about the axis of rotation of the assembly.

3. An assembly according to claim 1 or claim 2 in which each of said flanges is polygonal, said printed circuit boards being secured to the polygon sides the number of which corresponds to the number of printed circuit boards.

4. An assembly according to any one of the preceding claims and including a binder wound around the arrangement of said printed circuit boards to fasten the latter together.

5. An assembly according to any one of claims 1 to 3 wherein the printed circuit boards are secured to the flanges by means of screws.

6. An assembly according to any one of the preceding claims and including means for multiplexing a plurality of signals for transmission.

7. A rotary signal transmitter including a printed circuit board assembly according to any one of the preceding claims and mounted on a shaft for rotation with the latter.

8. A rotary signal transmitter according to claim 7, wherein said printed circuit board assembly has a boss on which is mounted a rotary transformer assembly of a secondary coil and a core and a stationary power supply being provided for supplying an electric current through said rotary transformer to a signal conversion circuit of the transmitter.

9. A rotary signal transmitter according to claim 7 or claim 8 wherein a signal transmission device is provided comprising a light-emitting element, an end attachment base being removably secured to the axial end of said printed circuit board assembly to support centrally thereon said light-emitting element, said light-emitting element having its optical axis held in alignment with a central axis of said rotational shaft.

10. A rotary signal transmitter according to any one of claims 7 to 9 and including a protective cover surrounding the printed circuit board assembly, said protective cover having a diameter approximating an outside diameter of said assembly and said protective cover having holes at predetermined positions for insertion therethrough of a screwdriver for turning screws securing said printed circuit board assembly to said rotational shaft.

11. A system for transmitting measurement data from a rotating body, said system including a plurality of sensors each connected to a rotary signal transmitter according to any one of claims 7 to 10.

12. A system according to claim 11 in which said plurality of sensors are mounted on a single rotary body, and multiplexing means are provided comprising a time-sharing circuit for time-sharing the output signals from said sensors and supplying the time-shared signals to a signal conversion circuit for supplying signals for transmission.

13. A system according to claim 11 in which said plurality of sensors are mounted respectively on different rotating bodies, said signal transmitter for each rotating body having a light-emitting element, a receiver comprising a plurality of condenser lenses being disposed in respective confronting relationships to said light-emitting elements and an optical fibre cable connected optically between said condenser lenses and a central processing unit, and multiplexer means being arranged to control light signals emitted from said light-emitting elements.

**Patentansprüche**

1. Drehbare gedruckte Schaltungsplattenanordnung für einen Signalgeber, die auf der Drehachse eines rotierenden Körpers anbringbar ist, wobei diese Anordnung elektronische Teile enthält, die auf der Montagefläche der gedruckten Schaltungsplatte befestigt sind, dadurch gekennzeichnet, daß die Anordnung eine trommelförmige Befestigungsbasis mit einem Flanschpaar aufweist, wobei die Montagefläche radial nach innen weist und daß die gedruckten Schaltungsplatten auf den Flanschpaaren und um die Befestigungsbasis herum mit Abstand und zylinderartig befestigt sind.

2. Anordnung nach Anspruch 1, dadurch gekennzeichnet, daß die gedruckten Schaltungsplatten und die elektrischen Komponenten so angeordnet sind, daß sie um die Drehachse der Anordnung rotationsausgeglichen vorliegen.

3. Anordnung nach Anspruch 1 oder 2, dadurch gekennzeichnet, daß jeder Flansch polygonal ist und daß die gedruckten Schaltungsplatten an den polygonalen Seiten befestigt sind, wobei die Anzahl der polygonalen Seiten der Anzahl der gedruckten Schaltungsplatten entspricht.

4. Anordnung nach einem der vorstehenden Ansprüche, dadurch gekennzeichnet, daß eine Abspannung um die Anordnung gewickelt ist, um die gedruckten Schaltungsplatten zusammenzuhalten.

5. Anordnung nach einem der Ansprüche 1 bis 3, dadurch gekennzeichnet, daß die gedruckten Schaltungsplatten an den Flanschen mittels Schrauben befestigt sind.

6. Anordnung nach einem der vorstehenden Ansprüche, dadurch gekennzeichnet, daß Mittel vorgesehen sind zur gleichzeitigen Übertragung einer Mehrzahl von Signalen.

7. Drehbarer Signalgeber, der eine gedruckte Schaltungsplattenanordnung nach einem der vorstehenden Ansprüche enthält und der auf einer Welle zur Drehung mit dieser angeordnet ist.

8. Drehbarer Signalgeber nach Anspruch 7, dadurch gekennzeichnet, daß die gedruckte Schaltungsplattenanordnung eine Nabe aufweist, auf der ein Drehtransformator mit einer Sekundärspule und einem Kern angeordnet ist und daß eine stationäre Energiequelle vorgesehen ist, die elektrischen Strom durch den Drehtransformator zum Signalwandlungskreis des Gebers liefert.

9. Drehbarer Signalgeber nach Anspruch 7 oder 8, dadurch gekennzeichnet, daß eine Signalübertragungseinrichtung vorgesehen ist, die ein Licht aussendendes Element, sowie eine Befestigungsfläche aufweist, die lösbar an dem axialen Ende der gedruckten Schaltungsplattenanordnung befestigt ist, um mittig darauf das Licht aussendende Element aufzunehmen und daß die optische Achse des Licht aussendenden Elementes ausgerichtet mit der zentralen Achse der drehbaren Welle gehalten wird.

10. Drehbarer Signalgeber nach einem der Ansprüche 7 bis 9, dadurch gekennzeichnet, daß eine Schutzschicht vorgesehen ist, die die gedruckte Schaltungsplattenanordnung umgibt, wobei diese Schutzschicht einen Durchmesser aufweist, der annähernd dem Außendurchmesser der Anordnung entspricht und daß die Schutzschicht in vorbestimmten Positionen Löcher aufweist, durch die ein Schraubenzieher steckbar ist, um die Schrauben, die die gedruckte Schaltungsplattenanordnung an der drehbaren Welle halten zu drehen.

11. System zur Übertragung von Meßdaten von einem rotierenden Körper, wobei dieses System eine Mehrzahl von Sensoren enthält, die jeweils mit einem drehbaren Signalgeber nach einem der Ansprüche 7 bis 10 verbunden sind.

12. System nach Anspruch 11, dadurch gekennzeichnet, daß die Sensoren an einem einzelnen drehbaren Körper befestigt sind und daß Multiplexer vorgesehen sind, die eine Zeitteilerschaltung aufweisen, zur Zeitteilung der Ausgangssignale der Sensoren und zum Übertragen der zeitgeteilten Signale an einen Signalwandlerkreis zur Lieferung von Übertragungssignalen.

13. System nach Anspruch 11, dadurch gekennzeichnet, daß die Sensoren an verschiedenen drehbaren Körpern befestigt sind, daß der Signalgeber für jeden drehbaren Körper ein Licht aussendendes Element, sowie einen Empfänger aufweisen der eine Mehrzahl von Kondensorlinsen enthält, die den Licht aussendenden Elementen entsprechend gegenüberliegend angeordnet sind, daß ein optisches Faserkabel optisch verbunden zwischen den Kondensorlinsen und einer zentralen Prozeßeinheit vorgesehen ist und daß Multiplexer so angeordnet sind, daß sie Lichtsignale von den Licht aussendenden Elementen überwachen.

**Revendications**

1. Ensemble de cartes de circuit imprimé tournant pour un émetteur de signaux destiné à être monté sur l'axe de rotation d'une pièce tournante, ledit ensemble comprenant des composants électroniques fixés à des surfaces de montage des cartes de circuit imprimé, caractérisé par le fait que ledit ensemble comprend encore un socle de fixation en forme de bobine ayant deux brides et par le fait que lesdites faces des surfaces de montage sont tournées radialement vers l'intérieur, lesdites cartes de circuit imprimé étant montées sur lesdites brides et autour de ladite base de fixation en un montage cylindrique en étant espacées le long de la circonférence.

2. Ensemble selon la revendication 1, dans lequel lesdites cartes de circuit imprimé et lesdits composants électriques sont disposés de façon à obtenir un équilibre rotationnel autour de l'axe de rotation de l'ensemble.

3. Ensemble selon la revendication 1 ou la revendication 2, dans lequel chacune desdites brides a une forme polygonale, lesdites cartes de circuit imprimé étant fixées sur les côtés du polygon dont le nombre correspond au nombre des cartes de circuit imprimé.

4. Ensemble selon l'une quelconque des revendications précédentes, et comprenant un lien enroulé autour du montage desdites cartes de circuit imprimé pour attacher ces dernières ensemble.

5. Ensemble selon l'une quelconque des revendications 1 à 3 dans lequel les cartes de circuit imprimé sont fixées sur les brides au moyen de vis.

6. Ensemble selon l'une quelconque des revendications précédentes, comprenant en plus des moyens pour multiplexer une pluralité de signaux en vue de leur transmission.

7. Emetteur de signaux tournant comprenant un ensemble de cartes de circuit imprimé selon l'une quelconque des revendications précédentes, monté sur un arbre pour tourner avec ce dernier.

8. Emetteur de signaux tournant selon la revendication 7, dans lequel ledit ensemble de cartes de circuit imprimé comprend un bosselage sur lequel est monté un ensemble de transformateurs tournant avec un enroulement secondaire et un noyau et une source d'alimentation fixe étant prévue pour appliquer un courant électrique à travers ledit transformateur tournant à un circuit de conversion de signaux de l'émetteur.

9. Emetteur de signaux tournant selon la revendication 7 ou la revendication 8, dans lequel est prévu un dispositif de transmission de signaux comprenant un élément émetteur lumineux, un socle de fixation terminal étant fixé de façon amovible à l'extrémité axiale dudit ensemble de cartes de circuit imprimé pour supporter en son centre ledit élément émetteur de lumière, ledit élément émetteur de lumière ayant son axe optique maintenu en alignement avec l'axe central dudit arbre tournant.

10. Emetteur de signaux tournant selon l'une quelconque des revendications 7 à 9, et comprenant un capot protecteur entourant l'ensemble des cartes de circuit imprimé, ledit capot protecteur ayant un diamètre sensiblement égal au diamètre extérieur dudit ensemble et ledit capot protecteur ayant des trous en des positions déterminées pour permettre d'insérer par ces trous un tournevis destiné à tourner les vis fixant ledit ensemble de cartes de circuit imprimé audit arbre tournant.

11. Système pour transmettre des données de mesures provenant d'une pièce tournante, ledit système comprenant une pluralité de capteurs connectés chacun à un émetteur de signaux tournant selon l'une quelconque des revendications 7 à 10.

12. Système selon la revendication 11 dans lequel les capteurs de ladite pluralité sont montés sur une seule pièce tournante, et des moyens multiplexeurs sont prévus qui comprennent un circuit à partage du temps pour partager dans le temps les signaux délivrés par le capteur et appliquer les signaux partagés dans le temps à un circuit de conversion des signaux pour appliquer les signaux destinés à la transmission.

13. Système selon la revendication 11, dans lequel les capteurs de ladite pluralité sont respectivement montés sur différentes pièces tournantes, ledit émetteur de signaux de chaque pièce tournante comprenant un élément émetteur lumineux, un récepteur comprenant une pluralité de lentilles condenseurs étant disposées en relation respective face à face avec lesdits éléments émetteurs lumineux et un câble à fibres optiques connecté optiquement entre lesdites lentilles condenseurs et une unité centrale de traitement, lesdits moyens multiplexeurs étant agencés pour contrôler les signaux lumineux émis par lesdits éléments émetteurs lumineux.

0 075 620

Fig. 1.

Fig. 2.

1

Fig. 3.

Fig. 4.

Fig. 5.

Fig. 6.

Fig. 7.

0 075 620

Fig. 8.

4

Fig 10

Fig. 9

Fig 11